# EUROPÄISCHE PATENTSCHRIFT

(11) **EP 1 546 282 B1**
(45) Veröffentlichungstag und Bekanntmachung des Hinweises auf die Patenterteilung: **23.08.2006**
(21) Anmeldenummer: 03769267.0
(22) Anmeldetag: 09.09.2003
(51) Int. Cl.: C09K 8/32

(54) **BOHRLOCHBEHANDLUNGSMITTEL MIT NIEDRIG-TOXISCHER ÖLPHASE**
BOREHOLE TREATMENT AGENT CONTAINING LOW TOXIC OIL PHASE
PRODUIT DE TRAITEMENT DE TROUS DE FORAGE CONTENANT UNE PHASE HUILEUSE A FAIBLE TOXICITE

(30) Priorität: 18.09.2002 DE 10243312
(43) Veröffentlichungstag der Anmeldung: 29.06.2005
(73) Patentinhaber: Cognis IP Management GmbH, 40589 Düsseldorf (DE)
(72) Erfinder: MÜLLER, Heinz, 40789 Monheim (DE)
(86) Internationale Anmeldenummer: PCT/EP2003/009981
(87) Internationale Veröffentlichungsnummer: WO 2004/029175

(56) Entgegenhaltungen:
- EP-A- 0 627 481
- US-A- 5 869 434
- US-A1- 2003 144 153
- DATABASE WPI Section Ch, Week 200380 Derwent Publications Ltd., London, GB; Class H01, AN 2003-865897 XP002267202 & WO 03 093392 A (PETROLEUM OIL & GAS CORP SOUTH AFRICA PR), 13. November 2003 (2003-11-13)

## Beschreibung

Die Erfindung beschreibt Bohrlochbehandlungsmittel, die eine wässerige und eine Ölphase enthalten, wobei diese Ölphase besonders niedrige Toxizitätswerte gegenüber marinen Kleinstlebewesen aufweist.

Bohrlochbehandlungsmittel sind alle Arten von Hilfsflüssigkeiten, die bei der Erbohrung von Erdöl- oder Erdgas-Lagerstätten Einsatz finden können. Als charakteristisches Beispiel für solche Behandlungsmittel wird im nachfolgenden die Erfindung anhand von Bohrspülflüssigkeiten und darauf aufgebauten Bohrspülschlämmen beschrieben, die sowohl bei landgestützten als auch bei seegestützten Bohrungen Verwendung finden können. Das Anwendungsgebiet der erfindungsgemäßen Abwandlung von Hilfsflüssigkeiten der hier betroffen Art ist jedoch nicht darauf beschränkt. In Betracht kommen die zahlreichen weiteren Hilfsflüssigkeiten des hier angesprochenen Sachgebiets. Als Beispiele seien benannt Spotting Fluids, Spacer, Packer Fluids, Hilfsflüssigkeiten für Workover und Stimulierung und für das Fracturing. Betroffen sind durch die Erfindung dabei sowohl Hilfsflüssigkeiten der genannten Art, die ölbasiert sind, d.h. mit einer geschlossenen Ölphase arbeiten, als auch Hilfsmittel, in denen die Ölphase in einer insbesondere wässrigen geschlossenen Phase emulgiert ist. Bohrspülflüssigkeiten bzw. darauf aufgebaute Bohrspülschlämme sind charakteristische Beispiele der unterschiedlichen Möglichkeiten.

Bekannt sind einerseits wasserbasierte Bohrspülungen mit einem Gehalt an etwa 1 bis 50% emulgierter Ölphase - neben den anderen üblichen Hilfsstoffen einer solchen Bohrspülung - die auch als O/W-Emulsionsspülungen bezeichnet werden. Auf der anderen Seite sind in breitem Umfang ölbasierte Spülungssysteme im praktischen Einsatz, bei denen das Öl die fließfähige Phase oder doch wenigstens einen substantiellen Anteil der fließfähigen Phase als geschlossene Ölphase bildet. Besondere Bedeutung haben hier die sogenannten Invert-Bohrspülschlämme, die auf der Basis W/O-Emulsionen eine disperse wässrige Phase in der geschlossenen Ölphase enthalten. Der Gehalt an disperser wässriger Phase liegt üblicherweise im Bereich von wenigstens etwa 5 bis 10 Gew.-% bis zu etwa 50 bis 60 Gew.-%. Neben diesen W/O-Invert-Bohrspülschlämmen sind aber auch die sogenannten true-oil-Muds bekannt, deren Flüssigphase nahezu ausschließlich aus einer geschlossenen Ölphase gebildet ist, die allenfalls geringe Mengen - üblicherweise nicht mehr als etwa 5 bis 10 Gew.-% - an wässriger Phase dispergiert enthalten.

Die nicht-wässerige Phase derartiger Spülungssysteme wird durch die sogenannte Carrier-Fluid gebildet. Es handelt sich dabei in der Regel um Dieselöl, welches mit bestimmten Additiven versetzt die eigentliche Bohrspülung bildet. Mit Ende der achtziger Jahre kam aber der Bedarf nach umweltfreundlichen Spülungssystemen und somit Carrier-Fluids auf. Diese sollten insbesondere besser biologisch abbaubar sein, als das bislang eingesetzte Dieselöl. Neben diversen flüssigen Estern, wie sie z.B. in der EP 0 374 672 A1 beschrieben werden, wurden auch olefinische Kohlenwasserstoffe auf ihre Brauchbarkeit hin untersucht. Verwiesen sei hier exemplarisch auf die EP 0 765 368 A1 der Anmelderin, welche die Verwendung von sogenannten Alpha-Olefinen als Carrier-fluid zum Gegenstand hat.

Nach wie vor besteht aber das Bedürfnis, nach neuen Carrier-Fluids, da die bekannten Verbindungen häufig nicht unter allen Einsatzbedingungen brauchbar sind oder nicht die steigenden Anforderungen an biologisch Abbaubarkeit oder niedriger Toxizität erfüllen. Gerade das letztere Kriterium gewinnt zunehmend an Bedeutung, da immer mehr Bohrungen in ökologisch sensiblen Gebieten niedergebracht werden sollen. Dies gilt besonders bei sogenannten off-shore Bohrungen, also Bohrungen, die im Meeresboden niedergebracht werden.
Die Ermittlung der Toxizität einer Spülung erfolgt dabei in der Regel durch biologische Testungen, in denen marine Kleinstlebewesen den Bestandteilen der Spülung in unterschiedlicher Konzentration ausgesetzt werden. Ziel ist es, Spülungssysteme zu finden, die sowohl die physikalisch, technischen Anforderungen erfüllen, als auch eine möglichst geringe Toxizität gegenüber der Umwelt aufweisen. Es sei an dieser Stelle auch auf die physikalischen Belastungen der Bohrspülungen hingewiesen. Die Spülungen werden in großen Täufen auf hohe Temperaturen, bis 250°C und mehr, erhitzt, es herrschen hohe Drücke vor und dabei müssen die Verbindungen der Spülung gleichzeitig sowohl chemisch stabil bleiben als auch in ihrem Viskositätsverhalten keine starken Veränderung aufweisen und weiterhin auch unter den geschilderten Bedingungen eine stabile Emulsion ausbilden.

Aufgabe der vorliegenden Erfindung war es, Bohrlochbehandlungsmittel, insbesondere Bohrspülungen bereitzustellen, die sowohl in Bezug auf ihre anwendungstechnischen Eigenschaften als auch in Bezug auf die ökologische Verträglichkeit verbessertet sind.

Gegenstand der vorliegenden Anmeldung sind daher Bohrlochbehandlungsmittel, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, wobei die nichtwässerige Phase ganz oder teilweise ausgewählt ist aus der Gruppe der
a) Paraffine mit 5 bis 22 C-Atomen und/oder,
b) internen Olefine mit 12 bis 30 C-Atomen im Molekül jeweils in Abmischung mit
c) Carbonsäureestern der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet,
oder aus Mischungen der Komponenten a) bis c), dadurch gekennzeichnet, dass der Quotient aus der Toxizität von internen Olefinen der Kettenlänge C16/C18 (Standard lO) und der Toxizität der Bestandteile der nicht-wässerigen Phase, jeweils gemessen nach dem Leptocheirus plumulosus acute, static 96-hour/10. day sediment toxicity test (nach-ASTM E 1367 - 92 & EPA/600/R-94/025, Section 11), kleiner 1 ist.

Die Toxizitätsprüfung mittels des oben genannten Leptocheirus-Tests nach ASTM E 1367 wird seitens der Environmental Protection Agency (EPA) für solche Bohrspülsysteme vorgeschrieben, die bei Bohrungen im Golf von Mexiko zum Einsatz kommen sollen. Um eine Vergleichbarkeit der Ergebnisse zu erleichtern wird die Toxizität für eine Standard-Verbindung, nämlich ein Gemisch von internen Oelfinen der Kettenlangen C16/C18 verglichen mit den Ergebnissen der zu prüfenden Carrier-Fluids. Der Quotient F (relative Toxizität) wird wie folgt gebildet: F = Toxizität (Standard) / Toxizität (Carrier-Fluid). Die erfindungsgemäßen Spülungen enthalten Ölphasen, deren Wert für F kleiner 1 ist, vorzugsweise kleiner, 0,5 und in besonderen Fällen kleiner 0.4.

Wie die toxischen Untersuchungen zeigen, sind Kohlenwasserstoffe in bezug auf die Leptocheirus plumulosus-Ergebnisse als ausgesprochen kritisch zu bezeichnen. Die folgende Tabelle verdeutlicht diese Aussage:

| Als Carrierfluid eingesetzte Kohlenwasserstoffverbindungen | F |
|---|---|
| Verzweigte Paraffine | 2,7 - 4,53 |
| LAO C14/16 70:30 | 3,15 |
| Low tox. Mineralöl | 17,41 |
| C16/18 IO | 1,19 - 1,94 |

Umso überraschender waren die Ergebnisse, bei denen Ester - basierend auf Gesamt-C-Kette C16 - C26, in der Lage sind, die Gesamttoxizität für Mischungen aus Kohlenwasserstoffen mit Ester auf die seitens EPA geforderten Kriterien einzustellen. Im folgenden sind Beispielhafte Maischungen mit ihren F-Werten aufgelistet:

| Ölphase | Mischungsverhältnis | F-Wert |
|---|---|---|
| Paraffin verzweigt | | = 2,7 |
| Paraffin verzweigt + C20-22 = (OMC 586) | 70:30 | = 0,98/ 0,54 |
| Paraffin verzweigt + C20-22 = (OMC 586) | 60:40 | = 0,36 |
| Paraffin verzweigt + C20-22 = (OMC 586) | 50:50 | = 0,37 |
| Paraffin verzweigt + C21 = (OMC 233) | 50:50 | = 0,37 |
| C16/18 lO | | = 2,7 |
| C16/18 lO + C16-18 (OMC 1049) | 50:50 | = 0,87 |
| C16/18 lO + Misch. aus C16-18+ C20-22 | 40:40:20 | = 0,90 |
| C16/18 lO + C16-C26 blend | 50:50 | = 0,96 |
| LAO C14/16 70:30 + C20-22 OMC 586 | 50:50 | = 2,5 |
| Low tox Mineralöl + C20-22 OMC 586 | 50:50 | = 2,3 |

OMC586 bedeutet einen 2-Ethylhexanolester auf Basis gesättigter Fettsäuren C8-C14. OMC233 entspricht einem Isobutanolester auf Basis der C14-18 + C16-18-ungesättigten Fettsäuren. OMC1049 bedeutet einen Octansäure-2-ethylhexylester. Alle Produkte von der Fa. Cognis.

Die Ergebnisse zeigen, dass von den in der Bohrpraxis schon verwendeten Produkten, wie verzweigte Paraffine, LAO 14/16, low tox. Mineralöl und IO-C16/18, die beiden Produkte C14/16 LAO und das Low tox.-Mineralöl (durch keinen vertretbaren Esterzusatz) auf die EPA Referenzsubstanzdaten (lO C16/18 der Fa. Chevron) eingestellt werden können. Dies ist besonders in bezug auf LAO überraschend, da verzweigte Paraffine in der Regel die höhere Toxizität aufweisen. Die Daten zeigen aber, dass es möglich ist, Bohrspülungs-Systeme auf Basis von lO sowie Paraffinölen (verzweigt und linear) mittels erfindungsgemäßem Zusatz von Estern oder Estermischungen herzustellen, welche einen Leptocheirus-Tox-Faktor <1 erreichen.

Die Ölphasen der erfindungsgemäßen Systeme enthalten die Komponenten a) und/oder b) alleine oder gemeinsam in Abmischung mit Estern c) sowie ggf. in Abmischung mit anderen geeigneten Ölphasen.

### Komponente a)

Als Komponente a) werden erfindungsgemäß lineare oder verzweigte Paraffine mit 5 bis 22 C-Atomen eingesetzt. Paraffine - korrekter bezeichnet als Alkane - sind bekanntermaßen gesättigte Kohlenwasserstoffe, die für die linearen bzw. verzweigten Vertreter der allgemeine Summenformel CₙH₂ₙ₊₁ folgen. Die cyclischen Alkane folgen der allgemeinen Summenformel CₙH₂ₙ. Besonders bevorzugt sind die linearen und verzweigten Paraffine, wohingegen cyclische Paraffine weniger bevorzugt sind. Insbesondere bevorzugt ist die Verwendung von verzweigten Paraffinen. Weiterhin sind solche Paraffine bevorzugt, die bei Raumtemperatur flüssig sind, also solche mit 5 bis 16 C-Atomen pro Molekül. Es kann aber auch bevorzugt sein Paraffine mit 17 bis 22 C-Atome, die eine wachsartige Konsistenz aufweise einzusetzen. Bevorzugt ist es aber, Mischungen der verschiedenen Paraffine einzusetzen, wobei es besonders bevorzugt ist, wenn diese Mischungen bei 21 °C noch flüssig sind. Solche Mischungen können z.B. aus Paraffinen mit 10 bis 21 C-Atomen gebildet werden. Mit Bezug auf die Toxizität, insbesondere beim Leptocheirus plumulosus Test schneiden Paraffine alleine in der Regel nicht ausreichend ab. Typische F-Werte für Paraffine liegen zwischen 2,7 bis 4,53.

### Komponente b)

Als Komponente b) sind interne Olefine (im weiteren als lO abgekürzt) erfindungsgemäß einsetzbar. Dabei sind lO's ebenfalls an sich bekannte Verbindungen, die durch alle dem Fachmann dazu bekannten Verfahren hergestellt werden können. Die EP 0 787 706 A1 beschreibt z.B. ein Verfahren zur Synthese von lOs durch Isomerisierung von Alpha-Olefinen an Sulfon- oder Persulfonsäuren. Charakteristisch ist, dass die so gewonnen lO linear sind und mindestens eine olefinische Doppelbindung enthalten, die sich nicht in der Alpha-Position der Alkylkette befindet.
Vorzugsweise werden erfindungsgemäß solche 10 beziehungsweise lO-Gemische verwendet, welche lO mit 12 bis 30 C-Atomen im Molekül, vorzugsweise mit 14 bis 24 C-Atomen und insbesondere mit bis zu 20 C-Atomen im Molekül enthalten. Vorzugsweise weisen die erfindungsgemäß verwendeten Olefine nur eine olefinische Doppelbindung auf. Beim Leptocheirus-Test werden typischerweise F-Werte zwischen 1,1 und 2,0 erreicht.

### Komponente c)

Weiterhin sind Ester der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 6 bis 22 C-Atomen bedeutet, Bestandteil der erfindungsgemäßen Ölphasen. Auch derartige Ester sind bekannte chemische Verbindungen. Deren prinzipielle Verwendung in Bohrspülungen ist z.B. Gegenstand der EP 0 374 672 A1 bzw. der EP 0 374 671 A1. Die Leptocheirus-Werte für Ester liegen typischerweise im Bereich von 1,5 bis 0,2, sodass sich derartige Verbindungen allein bereits zur Ausbildung von niedrigtoxischen Ölphasen eignen können. Allerdings müssen dazu bestimmte Kettenlängen ausgewählt sein. Besonders bevorzugt ist die Verwendung solcher Ester deren Rest R für einen gesättigten oder ungesättigten Alkylrest mit 15 bis 25 und R' für einen gesättigten Alkylrest mit 3 bis 10 C-Atomen steht. Die gesättigten Verbindungen sind dabei im Besonderen bevorzugt. Es ist im Rahmen der erfinderischen Lehre bevorzugt dass in der Ölphase neben den Estern gemäß obiger Beschreibung maximal 15 Gew.-% (bezogen die Ölphase) an anderen Estern mit Resten R, die für Alkylreste mit mehr als 23 C-Atomen stehen, enthalten sind.

Ein weiterer Gegenstand der vorliegenden Erfindung betrifft daher solche Bohrspülungen, die neben der wässerigen Phase als Ölphase nur solche Ester der obigen allgemeinen Formel enthalten, deren Toxizität gemessen nach dem Leptocheirus-Test kleiner als 1 ist im Vergleich zum Standard lO. Die vorliegende Anmeldung beansprucht daher auch Bohrspülungen, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, wobei die nichtwässerige Phase zu mehr als 50 Gew.-% ausgewählt ist aus der Gruppe der Ester der allgemeinen Formel R-COO-R' in der R für einen linearen oder verzweigten, gesättigten oder ungesättigten Alkylrest mit 15 bis 25 C-Atomen steht und R' einen gesättigten, linearen oder verzweigten Alkylrest mit 3 bis 10 C-Atomen bedeutet, wobei die nicht-wässerige Phase eine relative Toxizität, also den Quotient aus der Toxizität von internen Olefinen der Kettenlänge C16/C18 (Standard IO) und der Toxizität der Bestandteile der nicht-wässerigen Phase, jeweils gemessen nach dem Leptocheirus plumulosus acute, static 96-hour/10 day sediment toxicity test (nach ASTM E 1367 - 92 & EPA/600/R-94/025, Section 11), von kleiner als 1 aufweist.

Neben den Komponente a) und/oder b) und c) können noch andere, wasserunlösliche Bestandteile in den Ölphasen enthalten sein, sofern diese ökologisch verträglich sind. Weitere besonders geeignete Mischungsbestandteile der erfindungsgemäßen Ölphasen sind daher im Einzelnen:
(i) Ester aus C1-5-Monocarbonsäuren und 1- und/oder mehrfunktionellen Alkoholen, wobei Reste aus 1-wertigen Alkoholen wenigstens 6, bevorzugt wenigstens 8 C-Atome aufweisen und die mehrwertigen Alkohole bevorzugt 2 bis 6 C-Atome im Molekül besitzen,
(ii) Mischungen sekundärer Ester, ausgewählt aus der Gruppe der Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nonadecylcarboxylat, Eicosylcarboxylat, Uneicocarboxylat, Doeicosylcarboxylat und Isomeren davon, wobei die sekundären Ester jeweils eine Carboxylat-Rest mit 1 bis 5 C-Atomen aufweisen, wasserunlösliche Ether einwertiger Alkohole mit 6 bis 24 C-Atomen,
(iii) wasserunlösliche Alkohole mit 8 bis 36 C-Atomen
(iv) poly-Alphaolefine (PAO) und alpha-Olefine
(v) Mischungen der Komponente (i) bis (v)

Von der Mitverwendung ausgeschlossen sind allerdings lineare alpha-Olefine der Kettenlängen C14/C16 sowie sogenannte *low toxicity* Mineralölen, da diese auch bei erfindungsgemäßer Abmischung mit Estern der Gruppe c) nicht die gewünschte Toxizitätswerte erreichen. Ebenso ist die Mitverwendung von Dieselöl ausgeschlossen. Weiterhin ist die Mitverwendung von Methylestem ausgeschlossen, da diese aufgrund ihrer hohen Toxizität nicht geeignet sind, um niedrig toxische Ölphasen im Sinne der Erfindung auszubilden. Unter bestimmten Bedingungen kann die Mitverwendung von derartigen Bestandteilen allerdings notwendig sein - die dann eingesetzten Mengen liegen aber nicht über 5 Gew.%, vorzugsweise bei maximal 2 Gew.-%, bezogen auf die Ölphase.

Als weitere zwingender Bestandteil enthalten die erfindungsgemäßen Mittel Emulgatoren. Bei deren Auswahl kommt es entscheidend auf den Spülungstyp an. Für die Praxis brauchbare Emulgatoren zur Ausbildung von W/O-Emulsionen sind insbesondere ausgewählte oleophile Fettsäuresalze, beispielsweise solche auf Basis von Amidoaminverbindungen. Beispiele hierfür werden in der bereits zitierten US-PS 4,374,737 und der dort zitierten Literatur beschrieben.

Zur Herstellung von W/O-Emulsionen werden aber noch andere, vorzugsweise nicht-ionische Emulgatoren eingesetzt. Aus dem großen Bereich der nichtionischen Emulgatoren lassen sich erfindungsgemäß besonders geeignete Emulgatoren wenigstens einer der nachfolgenden Stoffklassen zuordnen: (Oligo)-Alkoxylate - insbesondere niedrig-Alkoxylate, wobei hier entsprechenden Ethoxylaten und/oder Propoxylaten besondere Bedeutung zukommt - von lipophile Reste enthaltenden und zur Alkoxylierung befähigten Grundmolekülen natürlichen und/oder synthetischen Ursprungs. Dabei bedeutet niedrig in diesem Zusammenhang Werte von 2 bis 15 und insbesondere 2 bis 10 Teilen Alkoxyd pro Molekül Emulgator. Eine weitere wichtige Klasse nichtionischer Emulgatoren für die Zwecke der Erfindung sind Partialester und/oder Partialether mehrfunktioneller Alkohole mit insbesondere 2 bis 6 C-Atomen und 2. bis 6 OH-Gruppen und/oder deren Oligomere mit lipophile Reste enthaltenden Säuren und/oder Alkoholen. Geeignet sind dabei insbesondere auch Verbindungen dieser Art, die zusätzlich in ihre Molekülstruktur (Oligo)-Alkoxyreste und dabei insbesondere entsprechende Oligo-Ethoxyreste eingebunden enthalten. Ein weiteres Beispiel für entsprechende Emulgatorkomponenten sind Alkyl(poly)glykoside langkettiger Alkohole sowie die bereits benannten Fettalkohole natürlichen und/oder synthetischen Ursprungs beziehungsweise Alkylolamide, Aminoxide und Lecithine. Ohne Anspruch auf Vollständigkeit seien aus den hier aufgezählten Stoffklassen geeigneter Emulgatorkomponenten zusätzlich die folgenden Vertreter benannt: Die (Oligo)-Alkoxylate von lipophile Reste enthaltenden Grundmolekülen können sich insbesondere von ausgewählten Vertretern aus den nachfolgenden Klassen der lipophile Reste enthaltenden Grundmoleküle ableiten: Fettalkohole, Fettsäuren, Fettamine, Fettamide, Fettsäure- und/oder Fettalkoholester und/oder -ether, Alkanolamide, Alkylphenole und/oder deren Umsetzungsprodukte mit Formaldehyd sowie weitere Umsetzungsprodukte von lipophile Reste enthaltenden Trägermolekülen mit niederen Alkoxiden. Beispiele für Partialester und/oder Partialether mehrfunktioneller Alkohole sind insbesondere die entsprechenden Partialester mit Fettsäuren, beispielsweise von der Art der Glycerinmono- und/oder -diester, Glykolmonoester, entsprechende Partialester oligomerisierter mehrfunktioneller Alkohole, Sorbitanpartialester und dergleichen sowie entsprechende Verbindungen mit Ethergruppierungen.

Vorzugsweise werden die Ölphasen gebildet durch Mischungen der Komponenten a) und/oder b) mit den Esterölen c) im Gewichtsverhältnis von 10 : 1 bis 1 : 1, vorzugsweise von 5 : 1 bis 1 : 1 und insbesondere von 3 : 1 bis 1 : 1, um die gewünschte relative Toxizität zu erreichen.

Die Bohrlochbehandlungsmittel der vorliegenden Erfindungen liegen vorzugsweise als Wasser-in-Öl Emulsion (W/O) vor, d.h. dass eine homogene Ölphase die feindisperse wässerige Phase umschließt. Besonders bevorzugt ist die Ausführung der vorliegenden erfindungsgemäßen Mittel als Bohrspülung. Die erfindungsgemäßen Mittel weisen vorzugsweise Gewichtsverhältnis zwischen der wässerigen- und der Ölphase 50 : 50 bis 1 : 99, vorzugsweise 30 : 70 bis 20 : 80 und insbesondere 10 : 90 auf. Dabei ist es bevorzugt, dass die Ölphase zu mindestens 50 Gew.-%, vorzugsweise zu mindestens 80 Gew.-% und insbesondere zu mindestens 90 Gew.-% aus Verbindungen a) und/oder b) und c) besteht. Weiterhin sind solche Bohrlochbehandlungsmittel bevorzugt, deren Ölphase zu mindesten 50 Gew.-%, vorzugsweise zu mindestens 80 Gew.-% und insbesondere zu 100 Gew.% aus den Komponente a) bis c) gebildet werden. Die Gew.-%-Angaben beziehen sich hier auf das Gewicht der Ölphase.
Es kann vorteilhaft sein, dass die nicht-wässerige Ölphase der erfindungsgemäßen Mittel zu 100 Gew.% aus Abmischungen der Komponente a) und/ oder b) und c) besteht. Weiterhin kann es vorteilhaft sein, wenn nur Mischungen aus a) und c) oder, vorzugsweise nur b) und c) in den Ölphasen der erfindungsgemäßen Mitteln enthalten sind.

Die Ölphasen der erfindungsgemäßen Mittel weisen vorzugsweise Pourpoints unterhalb 0°C, vorzugsweise unterhalb -5 °C (gemessen nach DIN ISO 3016: 1982-10) auf. Die Brookfieldviskosität der Ölphasen beträgt bei 0 °C höchstens 50 mPas. Die erfindungsgemäßen Bohrlochbehandlungsmittel weisen, sofern sie als ölbasierte Bohrspülung vom W/O-Typ ausgebildet sind, eine plastische Viskosität (PV) im Bereich von 10 bis 70 mPas und eine Fließgrenze (Yield-Point YP) von 5 bis 60 lb/100 ft², jeweils bestimmt bei 50 °C, auf. Die kinematische Viskosität der Ölphase gemessen nach Ubbelohde bei 20°C sollte vorzugsweise höchstens 12 mm²/sec betragen. Die wässerige Phase der erfindungsgemäßen Mittel weist vorzugsweise einen pH-Wert im Bereich von 7,5 bis 12, vorzugsweise von 7,5 bis 11 und insbesondere von 8 bis 10 auf.

Neben den oben aufgeführten Bestandteilen, enthalten die erfindungsgemäßen Mittel noch Additive, beispielsweise Beschwerungsmittel, fluid-loss Additive, viskositätsregulierende Additive, Netzmittel, Salze, Biozide, Korrosionsinhibitoren, und/oder eine Alkalireserve. Es gelten hier die allgemeinen Gesetzmäßigkeiten für die Zusammensetzung der jeweiligen Behandlungsflüssigkeiten, für die im nachfolgenden anhand entsprechender Bohrspülschlämme beispielhafte Angaben gemacht werden. Die Additive können wasserlöslich, öllöslich und/oder wasser- bzw. öl-dispergierbar sein.
Klassische Additive können sein: fluid-loss-Additive, Strukturviskosität aufbauende lösliche und/oder unlösliche Stoffe, Alkalireserven, Mittel zur Inhibierung des unerwünschten Wasseraustausches zwischen erbohrten Formationen - z. B wasserquellbare Tone und/oder Salzschichten - und der z. B. wasserbasierten Spülflüssigkeit, Netzmittel zum besseren Aufziehen der emulgierten Ölphase auf Feststoffoberflachen, z. B. zur Verbesserung der Schmierwirkung, aber auch zur Verbesserung des oleophilen Verschlusses freigelegter Gesteinsformationen, bzw. Gesteinsflächen, Biocide, beispielsweise zur Hemmung des bakteriellen Befalls von O/W-Emulsionen und dergleichen. Nur auszugsweise sei dementsprechend zitiert: Feindisperse Zusatzstoffe zur Erhöhung der Spülungsdichte: Weit verbreitet ist das Bariumsulfat (Baryt), aber auch Calciumcabonat (Calcit) oder das Mischcarbonat von Calcium und Magnesium (Dolomit) finden Verwendung.
Mittel zum Aufbau der Strukturviskosität, die gleichzeitig auch als fluid-loss-Additive wirken: In erster Linie ist hier Bentonit bzw. hydrophobierter Bentonit zu nennen. Für Salzwasserspülungen kommt anderen vergleichbaren Tonen, insbesondere Attapulgit und Sepiolith in der Praxis beträchtliche Bedeutung zu. Auch der Mitverwendung organischer Polymerverbindungen natürlichen und/oder synthetischen Ursprungs kann-beträchtliche-Bedeutung-in-diesem. Zusammenhang zukommen. Zu nennen sind hier insbesondere Stärke oder chemisch modifizierte Stärken, Cellulosederivate wie Carboxymethylcellulose, Guargum, Synthangum oder auch rein synthetische wasserlösliche und/oder wasserdispergierbare Polymerverbindungen, insbesondere von der Art der hochmolekularen Polyacrylamidverbindungen mit oder ohne anionische bzw. kationische Modifikation. Verdünner zur Viskositätsregulierung: Die sogenannten Verdünner können organischer oder anorganischer Natur sein, Beispiele für organische Verdünner sind Tannine und/oder Qebracho- Extrakt. Weitere Beispiele hierfür sind Lignit und Lignitderivate, insbesondere Lignosulfonate.
Wie zuvor allerdings angegeben, wird in einer bevorzugten Ausführungsform der Erfindung auf die Mitverwendung toxischer Komponenten gerade hier verzichtet, wobei hier in erster Linie die entsprechenden Salze mit toxischen Schwermetallen wie Chrom und/oder Kupfer zu nennen sind. Ein Beispiel für anorganische Verdünner sind Polyphosphatverbindungen. Den unerwünschten Wasseraustausch mit beispielsweise Tonen inhibierende Zusatzstoffe: In Betracht kommen hier die aus dem Stand der Technik zu öl- und wasserbasierten Bohrspülungen bekannten Zusatzstoffe. Insbesondere handelt es sich dabei um Halogenide und/oder Carbonate der Alkali- und/oder Erdalkalimetalle, wobei entsprechenden Kaliumsalzen gegebenenfalls in Kombination mit Kalk besondere Bedeutung zukommen kann.
Alkalireserven: In Betracht kommen hier auf das Gesamtverhalten der Spülung abgestimmte anorganische und/oder organische Basen, insbesondere entsprechende basische Salze bzw. Hydroxide von Alkali- und/oder Erdalkalimetallen sowie organische Basen. Besonders bevorzugt ist hier die Verwendung von Kalk (Ca(OH)₂) als Alkalireserve. Typische Gehalte von Kalk in den Bohrspülung liegen zwischen 1 und 6 ib/bbt, wobei es entscheiden auf die Art und Zusammensetzung der Ölphase ankommt, welchen Mengen verwendet werden können. Art und Menge dieser basischen Komponenten sind vorzugsweise so gewählt und aufeinander abgestimmt, dass im Falle von hydrolyseanfälligen Estern, insbesondere ungesättigten Estern der Kohlenstoffzahl C16 bis C 24 keine übermäßige Hydrolyse auftritt, da die entstehenden Reaktionsprodukte, insbesondere die Fettsäuren, die Stabilität der Emulsionsbohrspülung beeinträchtigen können. Es ist in diesen Fällen bevorzugt, eine Alkalireserve in der Spülung bereitzustellen, die maximal einer Konzentration von 2 Ib/bbl der basischen Komponente, vorzugsweise von Kalk in der Spülung unter Arbeitsbedingungen entspricht.
Auf dem Gebiet der organischen Basen ist begrifflich zu unterscheiden zwischen wasserlöslichen organischen Basen - beispielsweise Verbindungen vom Typ des Diethanolamins - und praktisch wasserunlöslichen Basen ausgeprägt oelophilen Charakters. Gerade die Mitverwendung auch solcher öllöslichen Basen im Rahmen der vorliegenden Erfindung fällt in die Lehre. Oleophile Basen dieser Art, die sich insbesondere durch wenigstens einen längeren Kohlenwasserstoffrest mitbeispielsweise 8 bis 36 C-Atomen auszeichnen, sind dann allerdings nicht in der wässrigen Phase sondern in der Ölphase gelöst. Hier kommt diesen basischen Komponenten mehrfache Bedeutung zu. Einerseits können sie unmittelbar als Alkalireserve wirken. Zum anderen verleihen sie dem dispergierten Öltröpfchen einen gewissen positiven Ladungszustand und führen damit zu erhöhter Interaktion mit negativen Flächenladungen, wie sie insbesondere bei hydrophilen und zum Ionenaustausch befähigten Tonen anzutreffen sind. Erfindungsgemäß kann damit Einfluss auf die hydrolytische Spaltung und den oleophilen Verschluß wasserreaktiver Gesteinsschichten genommen werden. Die Menge der jeweils eingesetzten Hilfs- und Zusatzstoffe bewegt sich grundsätzlich im üblichen Rahmen und kann damit der zitierten einschlägigen Literatur entnommen werden.

Die Verwendung der Ester der Gruppe c) in Abmischung mit den Komponente a) und/oder b) führt dazu, dass Ölphasen mit niedriger relativer Toxizität gegenüber dem marinen Kleinstlebewesen Leptocheirus plumolosus erhalten werden können.
Weiterhin werden aber durch den Zusatz von Estern der allgemeinen Formel R-COO-R' in der R für einen linearen oder verzweigten, gesättigten oder ungesättigten Alkylrest mit 15 bis 25 C-Atomen steht und R' einen gesättigten, linearen oder verzweigten Alkylrest mit 3 bis 10 C-Atomen bedeutet, die Schmiereigenschaften von Bohrspülungen, enthaltend eine wässerige Phase und einer nichtwässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, deutlich verbessert. Vorzugsweise werden zwischen 5 und 15 Gew.-%, insbesondere von 8 bis 12 Gew.-% an diesen Estern in der Ölphase eingesetzt, um den gewünschten Schmierungs-Effekt zu erzielen.

Weiterhin kann durch Zusatz der Ester der allgemeinen Formel R-COO-R' in der R für einen linearen oder verzweigten, gesättigten oder ungesättigten Alkylrest mit 15 bis 25 C-Atomen steht und R' einen gesättigten, linearen oder verzweigten Alkylrest mit 3 bis 10 C-Atomen bedeutet, zu Ölphasen von üblichen Bohrspülungen der Einsatz von Strukturbildner, vorzugsweise Produkte auf Basis von ggf. chemisch oder physikalisch modifizierten Tonen, z.B. Bentonite, verringert werden. Zu Einzelheiten wird auf die einschlägige Literatur verwiesen, hier z.B. das "Manual of Drilling Fluid Technologiy", NL Baroid, 1979, Kapitel "Fundamental Characteristics of Drilling Fluids" und insbesondere die Offenbarung der Seiten 5 bis 8. Somit entstehen beträchtliche Kostenvorteile gegenüber Spülungen nach dem Stand der Technik. Die Einsatzmengen der erfindungsgemäß verwendeten Ester liegt dabei bei zwischen 15 und 100 Gew.%, vorzugsweise 25 bis 100 Gew.-% und insbesondere von 50 bis 100 Gew.-% bezogen auf die Menge der Ölphase. Durch die erfindungsgemäßen Ölphasen kann der Anteil an Strukturbildnern auf Ton-Basis deutlich reduziert werden. Es ist sogar möglich, Ton-freie Spülungen zu formulieren. Vorzugsweise werden die Ester im Sinne der Erfindung bei Emulsionbohrspülungen des Invert-Typs, also W/O verwendet.

### Beispiele

Im folgenden sind Beispiele für die erfindungsgemäßen niedrig-toxischen Bohrspülungen aufgeführt: Es wurden vier unterschiedliche Spülungen hergestellt, die auf folgender Rahmenrezeptur beruhten:

| | | |
|---|---|---|
| Ölphase | 0,567 bbl | |
| Wasser | 0,148 bbl | |
| organophiler Bentonit | 2,0 bbl | Geltone, Fa. Baroid |
| Emulgator | 8,0 bbl | (EZ-Mul NTE, Fa. Baroid) |
| fluid loss Additiv | 8,0 bbl | (Duratone HT, Fa. Baroid) |
| Kalk | 1,0 bbl | |
| CaCl₂ * 2 H₂O | 18,0 bbl. | |
| Barite | 326,1 bbl | |

| | | |
|---|---|---|
| Öl/Wasser-Verhältnis: 80/20 | | |

### Beispiel 1

Für das Beispiel 1 wurde als Ölphase eine Mischung (50 : 50 w/w) aus 0,284 bbl eines lO-Gemisches aus lOs mit C16 / C18 und einem gesättigten Monocarbosäureester auf Basis von Monocarbonsäuren mit 20 bis 22 C-Atomen und 2-Ethylhexanol eingesetzt (OMC 586, Fa. Cognis). Der F-Wert betrug 0,87.
In den folgenden Tabellen sind die rheologischen Kenndaten jeweils vor und nach 16 h Alterung der Spülungen bei 250 °F aufgeführt. Die Messungen der rheologischen Daten erfolgten immer gemäß API bulletin RP 13 B-2.

| | ungealtert | gealtert | |
|---|---|---|---|
| Plastische Viskosität (PV) | 25 | 25 | cP |
| Fließgrenze (YP) | 17 | 14 | lb/100 ft² |
| Gelstärke 10sec/10 min. | 7/8 | 6/6 | Ib/100 ft² |

### Vergleichsbeispiel 1

Die Spülung des Vergleichsbeispiels enthielt in der Ölphase nur ein lO-Gemisch auf Basis lO mit C16 / C18. Der F-Wert betrug aber 2,7.

| | ungealtert | gealtert | |
|---|---|---|---|
| Plastische Viskosität (PV) | 28 | 20 | cP |
| Fließgrenze (YP) | 14 | 5 | Ib/100 ft² |
| Gelstärke 10sec/10 min. | 6/7 | 4/6 | Ib/100 ft² |

Es konnte gezeigt werden, dass die Verwendung von Ester/Paraffin-Mischungen die Herstellung niedrig-toxischer Bohrspülungen erlaubt, ohne das es zu einer Einschränkung der Gebrauchseigenschaften kommt.

### Beispiel 2

Für das Beispiel 2 wurde eine Spülung analog zu Beispiel 1 verwendet, allerdings wurde der Gehalt des Fluid loss Additives auf 4 Ib reduziert. Der F-Wert betrug 0,87.

| | ungealtert | gealtert | |
|---|---|---|---|
| Plastische Viskosität (PV) | 22 | 21 | cP |
| Fließgrenze (YP) | 11 | 12 | Ib/100 ft² |
| Gelstärke 10sec/10 min. | 5/6 | 5/7 | Ib/100 ft² |

### Vergleichsbeispiel 2:

Wiederum wurde als Vergleichsbeispiel eine Spülung mit ausschließlich 10 in der Ölphase verwendet.

| | ungealtert | gealtert | |
|---|---|---|---|
| Plastische Viskosität (PV) | 17 | 18 | cP |
| Fließgrenze (YP) | 6 | 11 | Ib/100 ft² |
| Gelstärke 10sec/10 min. | 3/4 | 3/4 | Ib/100 ft² |

### Beispiel 3

Folgende Aufstellung zeigt den Vergleich von Ölphasen auf Basis von Paraffin zu einer Ölphase auf Basis einer 1 :1 Paraffin / Ester-Mischung (Ester: OMC586). Paraffin von der Fa. Petro Canda, Typ: Puredrill IA-35. Die restlichen Bestandteile der Spülung entsprachen der obigen Rahmenrezeptur.

| Beispiele nach Alterung (16h, 250 °F), Öl/Wasser: 80/20 : | | | | | | | | |
|---|---|---|---|---|---|---|---|---|
| | **Paraffin** | **Paraffin Ester 1:1** | **Paraffin** | **Paraffin Ester 1:1** | **Paraffin** | **Paraffin Ester 1:1** | **Paraffin** | **Paraffin Ester 1:1** |
| Geltone Ib/bbl | 0 | 0 | 0,5 | 0,5 | 1 | 1 | 2 | 2 |
| PV | 20 | 20 | 18 | 20 | 20 | 22 | 22 | 25 |
| YP | 2 | 10 | 3 | 14 | 3 | 11 | 3 | 12 |

| Beispiele (vor Alterung) | | | | | | |
|---|---|---|---|---|---|---|
| | **Paraffin** | **Paraffin Ester 1:1** | **Paraffin** | **Paraffin Ester 1:1** | **Paraffin** | **Paraffin Ester 1:1** |
| Geltone Ib/bbl | 0 | 0 | 1 | 1 | 2 | 2 |
| PV | 18 | 23 | 19 | 22 | 23 | 27 |
| YP | 2 | 15 | 4 | 17 | 4 | 17 |

Wie den obenstehenden Ergebnissen zu entnehmen ist, ist es möglich, Systeme auf Basis Paraffin-Ester-Mischungen mit deutlich reduzierten Geltone-Gehalt zu formulieren. Versuche, solche Effekte mittels Mischungen aus unterschiedlichen aromatenfreien/-armen Kohlenwasserstoffen zu erzielen, brachten keinen Erfolg.

Ein weiteres wichtiges Kriterium ist die Basisviskosität von Ölphasen. Hier gemessen nach Ubbelohde, bei 20 °C mit den Kapillarenfaktoren. c = 0,009987, c = 0,009933, c = 0,029. Die kinematische Viskosität ergibt sich aus der Formel: v = Δt x c. Alles Ester auf Basis 2-Ethylhexanol.

| Beispiele: | | |
|---|---|---|
| 10-C_{16/18} + C₂₀₋₂₂-Ester | 1:1 | 6,1 mm²/s |
| Paraffin verzweigt + C₁₅₋₁₇-Ester | 1:1 | 4,9 mm²/s |
| Paraffin verzweigt + C₂₀₋₂₂-Ester | 1:1 | 7,2 mm²/s |
| Paraffin verzweigt + C₁₅₋₁₇ Ester+ C₂₄₋₂₆-Ester | 1:1:0,5 | 6,1 mm²/s |
| Paraffin verzweigt + C₂₄₋₂₆-Ester | 1:1 | 9,3 mm²/s |

## Patentansprüche

1. Bohrlochbehandlungsmittel, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, wobei die nichtwässerige Phase ganz oder teilweise ausgewählt ist aus der Gruppe der
a) Paraffine mit 5 bis 22 C-Atomen und /oder
b) internen Olefine mit 12 bis 30 C-Atomen im Molekül jeweils in Abmischung mit
c) Carbonsäureestern der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet,
**dadurch gekennzeichnet, dass** der Quotient aus der Toxizität von internen Olefinen der Kettenlänge C16/C18 (Standard IO) und der Toxizität der Bestandteile der nicht-wässerigen Phase, jeweils gemessen nach dem Leptocheirus plumulosus acute, static 96-hour/10 day sediment toxicity test (nach ASTM E 1367 - 92 & EPA/600/R-94/025, Section 11), kleiner 1 ist.

2. Bohrlochbehandlungsmittel, nach Anspruch 1, **dadurch gekennzeichnet, dass** sie als Wasser-in-Öl (W/O) Emulsion vorliegen.

3. Bohrlochbehandlungsmittel nach den Ansprüchen 1 bis 2, **dadurch gekennzeichnet, dass** es als Bohrspülung ausgestaltet ist.

4. Bohrlochbehandlungsmittel nach den Ansprüchen 1 bis 3, **dadurch gekennzeichnet, dass** das Gewichtsverhältnis zwischen der wässerigen- und der Ölphase 50 : 50 bis 1 : 99, vorzugsweise 30 : 70 bis 20 : 80 und insbesondere 10 : 90 beträgt.

5. Bohrlochbehandlungsmittel nach den Ansprüchen 1 bis 4, **dadurch gekennzeichnet, dass** die Ölphase zu mindestens 50 Gew.%, vorzugsweise zu mindestens 80 Gew.-% und insbesondere zu mindestens 90 Gew.-% aus Verbindungen a) und/oder b) und c) besteht.

6. Bohrlochbehandlungsmittel nach einem der Ansprüche 1 bis 5, **dadurch gekennzeichnet, dass** die Komponente a) ausgewählt ist aus der Gruppe der linearen oder verzweigten Paraffine mit 10 bis 21 C-Atomen, wobei verzweigte Paraffine besonders bevorzugt sind.

7. Bohrlochbehandlungsmittel nach einem der Ansprüche 1 bis 6, **dadurch gekennzeichnet, dass** die Komponente b) ausgewählt ist aus der Gruppe der internen Olefine mit 12 bis 30 C-Atomen, vorzugsweise 14 bis 24 und insbesondere mit bis zu 20 C-Atomen.

8. Bohrlochbehandlungsmittel nach den Ansprüchen 1 bis 7, **dadurch gekennzeichnet, dass** die Komponente c) ausgewählt ist aus Estern der Formel R-COOR' in denen R für gesättigte oder ungesättigte lineare Alkylreste mit 15 bis 23 C-Atomen steht und R' einen linearen oder verzweigten, gesättigten Alkylrest mit 6 bis 22 C-Atomen bedeutet.

9. Bohrlochbehandlungsmittel nach den Ansprüchen 1 bis 8, **dadurch gekennzeichnet, dass** neben den Estern gemäß Anspruch 7, maximal 15 Gew.-% (bezogen die Ölphase) an Estern mit Resten R, die für Alkylreste mit mehr als 23 C-Atomen stehen, enthalten sind.

10. Bohrlochbehandlungsmittel nach den Ansprüchen 1 bis 9, **dadurch gekennzeichnet, dass** die nichtwässerige Ölphase zu 100 Gew.-% aus den Verbindungen a) und/oder b) und c) besteht.

11. Bohrlochbehandlungsmittel nach den Ansprüchen 1 bis 10, **dadurch gekennzeichnet, dass** die nichtwässerige Ölphase zum mindestens 50 Gew.-%, vorzugsweise zu mindestens 80 Gew.-% und insbesondere zu 100 Gew.-% Abmischungen aus Verbindungen b) und c) enthält.

12. Bohrlochbehandlungsmittel nach den Ansprüchen 1 bis 11, **dadurch gekennzeichnet, dass** neben den Verbindungen a) bis c) noch weitere, ökologisch verträgliche wasserunlösliche Komponente enthalten sind.

13. Bohrlochbehandlungsmittel nach den Ansprüchen 1 bis 12, **dadurch gekennzeichnet, dass** als weitere Komponente Ester aus C1-C5 Monocarbonsäuren mit 1- und/oder mehrfunktionellen Alkoholen Verwendung finden, wobei die Alkohole mindestens 6 ,vorzugsweise mindestens 8 und die mehrwertigen Alkohole 2 bis 6 C-Atome im Molekül aufweisen.

14. Bohrlochbehandiungsmittel nach den Ansprüchen 1 bis 13, **dadurch gekennzeichnet, dass** als weitere Komponente Mischungen sekundärer Ester, ausgewählt aus der Gruppe der Propylcarboxylat, Butylcarboxylat, Pentylcarboxylat, Hexylcarboxylat, Heptylcarboxylat, Octylcarboxylat, Nonylcarboxylate, Decylcarboxylat, Undecylcarboxylat, Dodecylcarboxylat, Tridecylcarboxylat, Tetradecylcarboxylat, Pentadecylcarboxylat, Hexadecylcarboxylat, Heptadecylcarboxylat, Octadecylcarboxylat, Nonadecylcarboxylat, Eicosylcarboxylat, Uneicocarboxylat, Doeicosylcarboxylat und Isomeren davon, wobei die sekundären Ester jeweils eine Carboxylat-Rest mit 1 bis 5 C-Atomen aufweisen, in der nichtwässerigen Ölphase enthalten sind.

15. Bohrlochbehandlungsmittel nach den Ansprüchen 1 bis 14, **dadurch gekennzeichnet, dass** die nichtwässerige Ölphase einen Pourpoint unterhalb 0°C, vorzugsweise unterhalb -5 °C aufweist.

16. Bohrlochbehandlungsmittel nach den Ansprüchen 1 bis 15, als ölbasierte Bohrspülung vom W/O-Typ eine plastische Viskosität (PV) im Bereich von 10 bis 70 mPas und eine Fließgrenze (Yield-Point YP) von 5 bis 60 Ib/100 ft² jeweils bestimmt bei 50 °C, aufweist, **dadurch gekennzeichnet, dass** die nichtwässerige Ölphase eine Brookfield-Viskosität, bei 0 °C von höchstens 50 mPas aufweist.

17. Bohrlochbehandlungsmittel nach den Ansprüchen 1 bis 16, **dadurch gekennzeichnet, dass** es als ölbasierte Bohrspülung vom W/O-Typ eine plastische Viskosität (PV) im Bereich von 10 bis 60 mPas und eine Fließgrenze (Yield-Point YP) von 5 bis 40 lb/100 ft² jeweils bestimmt bei 50 °C, aufweist.

18. Bohrlochbehandlungsmittel nach den Ansprüchen 1 bis 17, **dadurch gekennzeichnet, dass** die Ölphase eine Viskosität nach Ubbelohde bei 20 °C von maximal 12 mm²/sec aufweist.

19. Bohrlochbehandlungsmittel nach den Ansprüchen 1 bis 18, **dadurch gekennzeichnet, dass** die wässerige Phase einen pH-Wert im Bereich von 7,5 bis 12, vorzugsweise von 7,5 bis 11 und insbesondere von 8 bis 10 aufweist.

20. Bohrlochbehandlungsmittel nach den Ansprüchen 1 bis 19, **dadurch gekennzeichnet, dass** die nichtwässerige Ölphase Abmischungen der Komponenten a) oder b) und c) im Gewichtsverhältnis von 10 : 1 bis 1 : 1, vorzugsweise von 5 :1 bis 1 : 1 und insbesondere von 3 :1 1 bis 1 :1 1 enthalten.

21. Bohrlochbehandlungsmittel nach den Ansprüchen 1 bis 20, **dadurch gekennzeichnet, dass** es nichtwässerige Komponenten b) enthält, deren relative Toxizität in Verhältnis zu Standard lO der Kettenlänge C16/C18 größer als 1 ist, wobei in der nichtwässerigen Ölphase Verbindungen gemäß c) enthalten sein müssen.

22. Verwendung von Abmischungen aus a) linearen oder verzweigten Paraffinen mit 10 bis 22 C-Atomen und/oder b) internen Olefinen mit 12 bis 30 C-Atomen im Molekül mit c) Carbonsäureester der allgemeinen Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet, zur Herstellung von Invert-Bohrspülungen geringer Toxizität.

23. Verwendung von Estern der Formel R-COO-R', in der R für einen linearen oder verzweigten, gesättigten oder ungesättigten Alkylrest mit 15 bis 25 C-Atomen steht und R' einen gesättigten, linearen oder verzweigten Alkylrest mit 3 bis 22 C-Atomen bedeutet, als Mischungsbestandteil in Invert-Bohrlspülungen, die Paraffine und/oder interne Olefine als Bestandteile der Ölphase enthalten, zur Verringerung der Toxizität der Ölphase der Invert-Bohrspülungen, gemessen nach dem Leptocheirus plumulosus acute, static 96-hour/10 day sediment toxicity test (nach ASTM E 1367 - 92 & EPA/600/R-94/025, Section 11).

24. Bohrspülung, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, wobei die nichtwässerige Phase zu mehr als 50 Gew.-% ausgewählt ist aus der Gruppe der Ester der allgemeinen Formel R-COO-R' in der R für einen linearen oder verzweigten, gesättigten oder ungesättigten Alkylrest mit 15 bis 25 C-Atomen steht und R' einen gesättigten, linearen oder verzweigten Alkylrest mit 3 bis 10 C-Atomen bedeutet, wobei die Bohrspülung eine relative Toxizität, also dem Quotient aus der Toxizität von internen Olefinen der Kettenlänge C16/C18 (Standard 10) und der Toxizität der Bestandteile der nicht-wässerigen Phase, jeweils gemessen nach dem Leptocheirus plumulosus acute, static 96-hour/10 day sediment toxicity test (nach ASTM E 1367 - 92 & EPA/600/R-94/025, Section 11), von kleiner als 1 aufweist.

25. Verwendung von Estern der allgemeinen Formel R-COO-R' in der R für einen linearen oder verzweigten, gesättigten oder ungesättigten Alkylrest mit 15 bis 25 C-Atomen steht und R' einen gesättigten, linearen oder verzweigten Alkylrest mit 3 bis 10 C-Atomen bedeutet, als Zusatz zu Bohrspülungen, enthaltend eine wässerige Phase und einer nicht-wässerigen Ölphase, Emulgatoren und ggf. weitere übliche Additive, wie beispielsweise Beschwerungsmittel, fluid-loss Additive,-viskositätsre.gulierende Additive, Netzmittel, Salze,-Biozide, Korrosionsinhibitoren, und/oder eine Alkalireserve, zur Verbesserung der Schmiereigenschaften der Bohrspülungen.

26. Verwendung von Estern der allgemeinen Formel R-COO-R' in der R für einen linearen oder verzweigten, gesättigten oder ungesättigten Alkylrest mit 15 bis 25 C-Atomen steht und R' einen gesättigten, linearen oder verzweigten Alkylrest mit 3 bis 10 C-Atomen bedeutet, als Zusatz zu Bohrspülungen, enthaltend eine wässerige Phase und einer nicht-wässerigen Ölphase, Emulgatoren und ggf. weitere übliche Additive, wie beispielsweise Beschwerungsmittel, fluid-loss Additive, viskositätsregulierende Additive, Netzmittel, Salze, Biozide, Korrosionsinhibitoren, und/oder eine Alkalireserve, zur Verringerung des Anteils an Strukturbildnern auf Basis von ggf. chemisch oder physikalisch modifizierten Tonen.

## Claims

1. Borehole treatment composition comprising an aqueous phase and a non-aqueous oil phase, emulsifiers and, where appropriate, further customary additives, such as weighting agents, fluid loss additives, viscosity regulators, wetting agents, salts, biocides, corrosion inhibitors and/or an alkali reserve, the non-aqueous phase being selected in whole or in part from the group consisting of
a) paraffins having from 5 to 22 carbon atoms and/or
b) internal olefins having from 12 to 30 carbon atoms in the molecule in each case in the form of a blend with
c) carboxylic esters of the general formula R-COO-R', where R stands for a linear or branched, saturated or unsaturated alkyl radical having from 15 to 25 carbon atoms and R' denotes a saturated, linear or branched alkyl radical having from 3 to 22 carbon atoms
**characterized in that** the ratio of the toxicity of internal olefins of chain length C16/C18 (standard IO) to the toxicity of the constituents of the non-aqueous phase, in each case measured by the Leptocheirus plumulosus acute, static 96 hour/10 day sediment toxicity test (in accordance with ASTM E 1367 - 92 & EPA/600/R-94/025, Section 11), is less than 1.

2. Borehole treatment composition according to Claim 1, **characterized in that** they are [sic] in water-in-oil (W/O) emulsion form.

3. Borehole treatment composition according to Claims 1 and 2, **characterized in that** it is formulated as a drilling mud.

4. Borehole treatment composition according to Claims 1 to 3, **characterized in that** the weight ratio between the aqueous phase and the oil phase is from 50:50 to 1:99, preferably from 30:70 to 20:80 and in particular 10:90.

5. Borehole treatment composition according to Claims 1 to 4, **characterized in that** at least 50% by weight, preferably at least 80% by weight and in particular at least 90% by weight of the oil phase is composed of compounds a) and/or b) and c).

6. Borehole treatment composition according to one of Claims 1 to 5, **characterized in that** component a) is selected from the group consisting of linear and branched paraffins having from 10 to 21 carbon atoms, branched paraffins being particularly preferred.

7. Borehole treatment composition according to one of Claims 1 to 6, **characterized in that** component b) is selected from the group consisting of internal olefins having from 12 to 30 carbon atoms, preferably from 14 to 24 and in particular up to 20 carbon atoms.

8. Borehole treatment composition according to Claims 1 to 7, **characterized in that** component c) is selected from esters of the formula R-COO-R' in which R stands for saturated or unsaturated linear alkyl radicals having from 15 to 23 carbon atoms and R' denotes a linear or branched saturated alkyl radical having from 6 to 22 carbon atoms.

9. Borehole treatment composition according to Claims 1 to 8, **characterized in that** in addition to the esters according to Claim 7 there is not more than 15% by weight (based on the oil phase) of esters with radicals R which stand for alkyl radicals having more than 23 carbon atoms.

10. Borehole treatment composition according to Claims 1 to 9, **characterized in that** 100% by weight of the non-aqueous oil phase is composed of the compounds a) and/or b) and c).

11. Borehole treatment composition according to Claims 1 to 10, **characterized in that** at least 50% by weight, preferably at least 80% by weight and in particular 100% by weight of the non-aqueous oil phase comprises blends of compounds b) and c).

12. Borehole treatment composition according to Claims 1 to 11, **characterized in that** in addition to the compounds a) to c) there are further, environmentally compatible, water-insoluble component [sic] present.

13. Borehole treatment composition according to Claims 1 to 12, **characterized in that** as a further component use is made of esters of C1-C5 monocarboxylic acids with mono- and/or polyfunctional alcohols, the alcohols having at least 6, preferably at least 8, and the polyhydric alcohols from 2 to 6, carbon atoms per molecule.

14. Borehole treatment composition according to Claims 1 to 13, **characterized in that** further components present in the non-aqueous oil phase include mixtures of secondary esters selected from the group consisting of propyl carboxylate, butyl carboxylate, pentyl carboxylate, hexyl carboxylate, heptyl carboxylate, octyl carboxylate, nonyl carboxylate, decyl carboxylate, undecyl carboxylate, dodecyl carboxylate, tridecyl carboxylate, tetradecyl carboxylate, pentadecyl carboxylate, hexadecyl carboxylate, heptadecyl carboxylate, octadecyl carboxylate, nohadecyl carboxylate, eicosyl carboxylate, uneicosyl carboxylate, doeicosyl carboxylate and isomers thereof, the secondary esters each having a carboxylate radical of 1 to 5 carbon atoms.

15. Borehole treatment composition according to Claims 1 to 14, **characterized in that** the non-aqueous oil phase has a pour point of below 0°C, preferably below -5°C.

16. Borehole treatment composition according to Claims 1 to 15, [lacuna] as an oil-based drilling mud of the W/O type has a plastic viscosity (PV) in the range from 10 to 70 mPas and a yield point (YP) from 5 to 60 lb/100 ft², measured in each case at 50°C, **characterized in that** the non-aqueous oil phase has a Brookfield viscosity at 0°C of not more than 50 mPas.

17. Borehole treatment composition according to Claims 1 to 16, **characterized in that** as an oil-based drilling mud of the W/O type it has a plastic viscosity (PV) in the range from 10 to 60 mPas and a yield point (YP) from 5 to 40 lb/100 ft² measured in each case at 50°C.

18. Borehole treatment composition according to Claims 1 to 17, **characterized in that** the oil phase has an Ubbelohde viscosity at 20°C of not more than 12 mm²/s.

19. Borehole treatment composition according to Claims 1 to 18, **characterized in that** the aqueous phase has a pH in the range from 7.5 to 12, preferably from 7.5 to 11 and in particular from 8 to 10.

20. Borehole treatment composition according to Claims 1 to 19, **characterized in that** the non-aqueous oil phase comprise [sic] blends of components a) or b) and c) in a weight ratio of from 10:1 to 1:1, preferably from 5:1 to 1:1 and in particular from 3:1 to 1:1.

21. Borehole treatment composition according to Claims 1 to 20, **characterized in that** it comprises non-aqueous components b) whose relative toxicity in relation to standard IOs of chain length C16/C18 is greater than 1, it being necessary for compounds according to c) to be present in the non-aqueous oil phase.

22. Use of blends of a) linear or branched paraffins having from 10 to 22 carbon atoms and/or b) internal olefins having from 12 to 30 carbon atoms per molecule with c) carboxylic ester [sic] of the general formula R-COO-R' in which R stands for a linear or branched, saturated or unsaturated alkyl radical having from 15 to 25 carbon atoms and R' denotes a saturated, linear or branched alkyl radical having from 3 to 22 carbon atoms for producing invert drilling muds of low toxicity.

23. Use of esters of the formula R-COO-R' in which R stands for a linear or branched, saturated or unsaturated alkyl radical having from 15 to 25 carbon atoms and R' denotes a saturated, linear or branched alkyl radical having from 3 to 22 carbon atoms as a mixture constituent in invert drilling muds which comprise paraffins and/or internal olefins as constituents of the oil phase for reducing the toxicity of the oil phase of the invert drilling muds, measured by the Leptocheirus plumulosus acute, static 96 hour/10 day sediment toxicity test (in accordance with ASTM E 1367 - 92 & EPA/600/R-94/025, Section 11).

24. Drilling mud comprising an aqueous phase and a non-aqueous oil phase, emulsifiers and, where appropriate, further customary additives, such as weighting agents, fluid loss additives, viscosity regulators, wetting agents, salts, biocides, corrosion inhibitors and/or an alkali reserve, more than 50% by weight of the non-aqueous phase being selected from the group consisting of esters of the general formula R-COO-R' in which R stands for a linear or branched, saturated or unsaturated alkyl radical having from 15 to 25 carbon atoms and R' denotes a saturated, linear or branched alkyl radical having from 3 to 10 carbon atoms, the drilling mud having a relative toxicity, i.e. the ratio of the toxicity of internal olefins of chain length C16/C18 (standard IO) to the toxicity of the constituents of the non-aqueous phase, in each case measured by the Leptocheirus plumulosus acute, static 96 hour/10 day sediment toxicity test (in accordance with ASTM E 1367 - 92 & EPA/600/R-94/025, Section 11), of less than 1.

25. Use of esters of the general formula R-COO-R' in which R stands for a linear or branched, saturated or unsaturated alkyl radical having from 15 to 25 carbon atoms and R' denotes a saturated, linear or branched alkyl radical having from 3 to 10 carbon atoms as an additive to drilling muds comprising an aqueous phase and a non-aqueous oil phase, emulsifiers and, where appropriate, further customary additives, such as weighting agents, fluid loss additives, viscosity regulators, wetting agents, salts, biocides, corrosion inhibitors and/or an alkali reserve, for improving the lubricating properties of the drilling muds.

26. Use of esters of the general formula R-COO-R' in which R stands for a linear or branched, saturated or unsaturated alkyl radical having from 15 to 25 carbon atoms and R' denotes a saturated, linear or branched alkyl radical having from 3 to 10 carbon atoms as an additive to drilling muds comprising an aqueous phase and a non-aqueous oil phase, emulsifiers and, where appropriate, further customary additives, such as weighting agents, fluid loss additives, viscosity regulators, wetting agents, salts, biocides, corrosion inhibitors and/or an alkali reserve, for reducing the fraction of structuring agents based on clays with or without chemical or physical modification.

## Revendications

1. Produit pour le traitement des trous de forage, contenant une phase aqueuse et une phase huileuse non aqueuse, des émulsionnants et le cas échéant d'autres additifs habituels usuels tels que par exemple des agents alourdissants, additifs anti-perte de fluide, additifs réglant la viscosité, agents mouillants, sels, biocides, inhibiteurs de corrosion et/ou un composé alcalin de réserve, la phase non aqueuse étant choisie, en totalité ou partiellement, dans le groupe constitué par :
a) des paraffines comportant de 5 à 22 atomes C et/ou
b) des oléfines internes comportant de 12 à 30 atomes C dans la molécule,
respectivement sous forme de mélange avec
c) des esters d'acides carboxyliques répondant à la formule générale R-COO-R', dans laquelle R représente un radical alkyle saturé ou non saturé, linéaire ou ramifié, comportant de 15 à 25 atomes C, et R' représente un radical alkyle saturé, linéaire ou ramifié, comportant de 3 à 22 atomes de carbone,
**caractérisé en ce que**
le rapport entre la toxicité d'oléfines internes de longueur de chaîne C16/C18 (standard IO) et la toxicité des composants de la phase non aqueuse, l'une et l'autre étant mesurée suivant le test dit « Leptocheirus plumulosus acute, static 96 hour/10 day sediment toxicity test » (selon ASTM E 1367-92 & EPA/600/R-94/025, section 11) est inférieur à 1.

2. Produit pour le traitement des trous de forage selon la revendication 1,
**caractérisé en ce qu'**
il se présente sous forme d'une émulsion "eau dans l'huile" (E/H).

3. Produit pour le traitement des trous de forage selon les revendications 1 et 2,
**caractérisé en ce qu'**
il est réalisé sous la forme de fluide de curage de forages.

4. Produit pour le traitement des trous de forage selon les revendications 1 à 3,
**caractérisé en ce que**
le rapport pondéral entre la phase aqueuse et la phase huileuse varie de 50 : 50 à 1 : 99 et de préférence de 30 : 70 à 20 : 80, et est plus particulièrement de 10 : 90.

5. Produit pour le traitement des trous de forage selon les revendications 1 à 4,
**caractérisé en ce que**
la phase huileuse se compose pour au moins 50 % en poids et de préférence pour au moins 80 % en poids, et plus particulièrement pour au moins 90 % en poids, des composés a) et/ou b) et c).

6. Produit pour le traitement des trous de forage selon les revendications 1 à 5,
**caractérisé en ce que**
le composant a) est choisi dans le groupe des paraffines linéaires ou ramifiées comportant de 10 à 21 atomes C, les paraffines ramifiées étant particulièrement privilégiées.

7. Produit pour le traitement des trous de forage selon les revendications 1 à 6,
**caractérisé en ce que**
le composant b) est choisi dans le groupe des oléfines internes comportant de 12 à 30 atomes C, de préférence de 14 à 24 atomes C, et plus particulièrement jusqu'à 20 atomes C.

8. Produit pour le traitement des trous de forage selon les revendications 1 à 7,
**caractérisé en ce que**
le composant c) est choisi parmi les esters répondant à la formule R-COOR', dans laquelle R représente des radicaux alkyle linéaires saturés ou non saturés comportant de 15 à 23 atomes C, et R' répresente un radical alkyle saturé, linéaire ou ramifié, comportant de 6 à 22 atomes C.

9. Produit pour le traitement des trous de forage selon les revendications 1 à 8,
**caractérisé en ce que**,
outre les esters selon la revendication 7, il contient au maximum 15 % en poids (rapportés à la phase huileuse) d'esters comportant des radicaux R, qui représentent des radicaux alkyle comportant plus de 23 atomes C.

10. Produit pour le traitement des trous de forage selon les revendications 1 à 9,
**caractérisé en ce que**
la phase huileuse non aqueuse est constituée à 100 % en poids des composés a) et/ou b) et c).

11. Produit pour le traitement des trous de forage selon les revendications 1 à 10,
**caractérisé en ce que**
la phase huileuse non aqueuse contient au moins 50 % en poids et de préférence au moins 80 % en poids, et plus particulièrement 100 % en poids, de mélanges des composés b) et c).

12. Produit pour le traitement des trous de forage selon les revendications 1 à 11,
**caractérisé en ce que**
outre les composés a) à c), il contient d'autres composants insolubles dans l'eau et compatibles du point de vue écologique.

13. Produit pour le traitement des trous de forage selon les revendications 1 à 12,
**caractérisé en ce que**
comme autres composants, on utilise des esters d'acides monocarboxyliques en C1-C5 et d'alcools monofonctionnels et/ou multifonctionnels, ces alcools comportant au moins 6 et de préférence au moins 8 atomes C dans la molécule, et les alcools multivalents comportant de 2 à 6 atomes C dans la molécule.

14. Produit pour le traitement des trous de forage selon les revendications 1 à 13,
**caractérisé en ce qu'**
il contient comme autres composants, dans la phase huileuse non aqueuse des mélanges d'esters secondaires, choisis dans le groupe des carboxylates de propyle, de butyle, de pentyle, d'hexyle, d'heptyle, d'octyle, de nonyle, de décyle, d'undécyle, de dodécyle, de tridécyle, de tétradécyle, de pentadécyle, d'hexadécyle, d'heptadécyle, d'octadécyle, de nonadécyle, d'eicosyle, d'uneiscosyle et de doeicosyle, ainsi que de leurs isomères, les esters secondaires contenant à chaque fois un radical carboxylate comportant de 1 à 5 atomes C.

15. Produit pour le traitement des trous de forage selon les revendications 1 à 14,
**caractérisé en ce que**
la phase huileuse non aqueuse présente un point d'écoulement situé en dessous de 0 °C et de préférence en dessous de - 5°C.

16. Produit pour le traitement des trous de forage selon les revendications 1 à 15,
qui, en tant que fluide de curage de forages à base d'huile du type E/H, présente une viscosité plastique (PV) dans la gamme de 10 à 70 mPas et une limite d'écoulement (yield-point YP) de 5 à 60 livres/ 100 pieds², déterminées à 50 °C,
**caractérisé en ce que**
la phase huileuse non aqueuse présente une viscosité Brookfield à 0 °C, de 50 mPas au maximum.

17. Produit pour le traitement des trous de forage selon les revendications 1 à 16,
**caractérisé en ce que**
en tant que fluide curage de forages à base d'huile du type E/H, il présente une viscosité plastique (PV) dans la gamme de 10 à 60 mPas et une limite d'écoulement (yield-point YP) de 5 à 40 livres/ 100 pieds², déterminées à 50 °C.

18. Produit pour le traitement des trous de forage selon les revendications 1 à 17,
**caractérisé en ce que**
la phase huileuse présente une viscosité selon Ubbelohde à 20 °C, de 12 mm²/seconde au maximum.

19. Produit pour le traitement des trous de forage selon les revendications 1 à 18,
**caractérisé en ce que**
la phase aqueuse présente un pH dans la gamme de 7,5 à 12 de préférence de 7,5 à 11, et plus particulièrement de 8 à 10.

20. Produit pour le traitement des trous de forage selon les revendications 1 à 19,
**caractérisé en ce que**
la phase huileuse non aqueuse contient des mélanges des composants a) ou b) et c) dans un rapport pondéral de 10 : 1 à 1 : 1 de préférence de 5 :1 à 1 : 1, et plus particulièrement de 3 : 1 à 1 : 1.

21. Produit pour le traitement des trous de forage selon les revendications 1 à 20,
**caractérisé en ce qu'**
il contient des composants b) non aqueux dont la toxicité relative par rapport au standard IO de longueur de chaîne C16/ C18 est supérieure à 1, des composés selon c) devant être contenus dans la phase huileuse non aqueuse.

22. Utilisation de mélanges a) de paraffines linéaires ou ramifiées comportant de 10 à 22 atomes C et/ou b) d'oléfines internes comportant de 12 à 30 atomes C dans la molécule avec c) des esters d'acides carboxyliques répondant à la formule générale R-COO-R', dans laquelle R représente un radical alkyle saturé ou non saturé, linéaire ou ramifié, comportant de 15 à 25 atomes C, et R' représente un radical alkyle saturé linéaire ou ramifié, comportant de 3 à 22 atomes C, pour la préparation de fluides de curage de forages invertis de faible toxicité.

23. Utilisation d'esters répondant à la formule R-COO-R' dans laquelle R représente un radical alkyle saturé ou non saturé, linéaire ou ramifié, comportant de 15 à 25 atomes C, et R' représente un radical alkyle saturé linéaire ou ramifié, comportant de 3 à 22 atomes C, en tant que composant de mélange dans des fluides de curage de forages invertis contenant des paraffines et/ou oléfines internes en tant que composants de la phase huileuse, pour réduire la toxicité de la phase huileuse des fluides de curage de forages invertis, mesurée selon le test dit « Leptocheirus plumulosus acute, static 96 hour/10 day sediment toxicity test » (selon ASTM E 1367-92 & EPA/600/R-94/025, section 11).

24. Fluide de curage de forages, contenant une phase aqueuse et une phase huileuse non aqueuse, des émulsionnants et le cas échéant d'autres additifs habituels tels que par exemple des agents alourdissants, additifs anti-perte de fluide, additifs réglant la viscosité, agents mouillants, sels, biocides, inhibiteurs de corrosion, et/ou un composé alcalin de réserve, la phase non aqueuse étant choisie, à plus de 50 % en poids, dans le groupe des esters répondant à la formule générale R-COO-R' dans laquelle R représente un radical alkyle saturé ou non saturé, linéaire ou ramifié, comportant de 15 à 25 atomes C, et R' représente un radical alkyle saturé linéaire ou ramifié, comportant de 3 à 10 atomes C, le fluide de curage de forages présentant une toxicité relative, c'est-à-dire un rapport entre la toxicité d'oléfines internes de longueur de chaîne C16/ C18 [standard IO] et la toxicité des composants de la phase non aqueuse, mesurée à chaque fois suivant le test dit « Leptocheirus plumulosus acute, static 96 hour/10 day sediment toxicity test » (selon ASTM E 1367-92 & EPA/600/R-94/025, section 11), inférieure à 1.

25. Utilisation d'esters répondant à la formule générale R-COO-R' dans laquelle R représente un radical alkyle saturé ou non saturé, linéaire ou ramifié, comportant de 15 à 25 atomes C, et R' représente un radical alkyle saturé linéaire ou ramifié, comportant de 3 à 10 atomes C, en tant qu'additifs pour des fluides de curage de forages, contenant une phase aqueuse et une phase huileuse non aqueuse, des émulsionnants et le cas échéant d'autres additifs habituels tels que par exemple des agents alourdissants, additifs anti-perte de fluide, additifs réglant la viscosité, agents mouillants, sels, biocides, inhibiteurs de corrosion et/ou un composé alcalin de réserve pour améliorer les propriétés de lubrification des produits de curage rinçage de forages.

26. Utilisation d'esters répondant à la formule générale R-COO-R' dans laquelle R représente un radical alkyle saturé ou non saturé, linéaire ou ramifié, comportant de 15 à 25 atomes C, et R' représente un radical alkyle saturé linéaire ou ramifié, comportant de 3 à 10 atomes C, en tant qu'additifs pour des fluides de curage de forage, contenant une phase aqueuse et une phase huileuse non aqueuse, des émulsionnants et le cas échéant d'autres additifs habituels tels que par exemple des agents alourdissants, additifs anti-perte de fluide, additifs réglant la viscosité, agents mouillants, sels, biocides, inhibiteurs de corrosion et/ou un composé alcalin de réserve pour réduire la proportion de formateurs de structure, à base d'argiles le cas échéant modifiées par voie chimique ou physique.
